# EUROPÄISCHE PATENTSCHRIFT

(11) **EP 3 345 777 B1**
(45) Veröffentlichungstag und Bekanntmachung des Hinweises auf die Patenterteilung: **18.03.2020**
(21) Anmeldenummer: 17001983.0
(22) Anmeldetag: 06.12.2017
(51) Int. Cl.: B60F 3/00

(54) **AMPHIBISCHER WOHNWAGEN**
AMPHIBIOUS CARAVAN
CARAVANE AMPHIBIE

(30) Priorität: 13.12.2016 DE 102016014739
(43) Veröffentlichungstag der Anmeldung: 11.07.2018
(73) Patentinhaber: Heidenreich, Bernd, 16230 Chorin (DE); Heidenreich, Kathleen, 16230 Chorin (DE)
(72) Erfinder: Heidenreich, Bernd, 16230 Chorin (DE); Heidenreich, Kathleen, 16230 Chorin (DE)
(74) Vertreter: Köhler, Tobias

(56) Entgegenhaltungen:
- AU-A- 4 189 578
- DE-U1-202008 001 510
- US-A- 3 091 208
- US-A- 3 308 782
- US-A- 3 933 112
- US-A- 4 040 134
- US-A- 4 048 685
- US-A- 4 802 433
- US-A- 6 029 598
- US-B1- 8 454 399

## Beschreibung

Die Erfindung betrifft einen amphibischen Wohnwagen, dessen Schwimmkörper mehrfach Verwendung finden können und mit welchem eine einfache Art des Land-Wasser-Übergangs realisiert werden kann.

Schon seit geraumer Zeit gibt es immer wieder Ansätze Wohnwagen so zu modifizieren, dass diese auf dem Wasser genutzt werden können. Mindestens ebenso lange wird auch versucht, Boote oder Hausboote so umzugestalten, dass diese auch einfach über Land transportiert werden können.

So ist beispielsweise aus der DE 2239981 A ein Wohnboot bekannt, welches auf einem umrüstbaren Wohnwagenanhänger für Kraftfahrzeuge basiert.
Dazu werden auf beiden Längsseiten des Daches eines Wohnwagenanhängers zwei etwa der Gesamtlänge des Anhängerfahrgestells entsprechende, kufenartige Schwimmkörper (8, 9) abnehmbar befestigt, die beidseitig am Fahrgestell des Wohnwagenanhängers montierbar sind und in montiertem Zustand dem Wohnwagenanhänger Schwimmfähigkeit verleihen.

In der DE 3925415 A1 wird eine Zusatzvorrichtung zur Befestigung an einem Landfahrzeug beschrieben, mit welcher das Landfahrzeug schwimmfähig gemacht werden kann.

Dazu weist die Zusatzvorrichtung (10) Auftriebskörper (24) mit einem an das Gewicht und die Gewichtsverteilung des Landfahrzeugs angepassten Wasserverdrängungsvolumen auf, die zwischen einer über dem Fahrzeugdach befindlichen inaktiven Ruhestellung und einer aktiven, seitlich neben dem Landfahrzeug befindlichen Schwimmstellung verstellbar sind.
Die Zusatzvorrichtung (10) weist dabei ein zur Anordnung auf dem Dach des Fahrzeugs vorgesehenes Dachelement (12) auf, an dem an jeder der beiden gegenüberliegenden Längsseiten (14) mindestens ein in seiner Längenerstreckung veränderbares Spreizelement (16) mit seinem einen Endabschnitt (18) angelenkt ist, dessen zweiter Endabschnitt (22) an einem der Auftriebskörper (24) befestigt ist, dass an jedem Auftriebskörper (24) voneinander beabstandet Halteelemente (28) mit ihrem einen Endabschnitt (30) befestigt sind, deren zweiter Endabschnitt (32) an einem Ort (34) angelenkt ist, der von der Anlenkstelle (20) des ersten Endabschnittes (18) des zugehörigen Spreizelementes (16) beabstandet ist, dass am Dachelement (12) eine einen Segelbaum (74), einen Segelmast (76) und Segel (112, 122) aufweisende Segeleinrichtung (66) vorgesehen ist, wobei der Segelbaum (76) um eine zum Dachelement (12) mindestens annähernd senkrecht ausgerichtete erste Drehachse (62) und der Segelmast (76) um eine zum Dachelement (12) mindestens annähernd parallele zweite Drehachse (82) schenkbeweglich ist, und dass an der Heckseite des Dachelementes (12) ein mit einer Steuereinrichtung (162) verbundenes Steuerruder (68) vorgesehen ist.

Ebenfalls ist aus der DE 2544435 B2 ein Amphibienfahrzeug bekannt mit einem Bootsrumpf, einem seitlich über dessen Bordwand vorstehenden, als Wohn- oder Nutzraum ausgebildeten Aufbau, zwei jeweils um eine unter dem überstehenden Aufbau parallel zur Fahrzeuglängsachse verlaufende Drehachse zwischen einer in Fahrstellung heruntergeklappten und einer in Schwimmstellung gegen die Unterseite des überstehenden Aufbaus anliegenden, seitlich über diesen hinaus vorstehenden Lage verschwenkbaren Schwimmern mit einer in der Schwimmstellung über der Wasserlinie liegenden Deckfläche, in den Schwimmern angeordneten Radausnehmungen sowie Rädern zum Verfahren des Fahrzeugs an Land, dadurch gekennzeichnet, daß die Drehachsen (4) jeweils im Winkel zwischen der Bordwand und dem überstehenden Aufbau (5) angeordnet sind, daß jeder Schwimmer (3) einen in der Fahrstellung an der Bordwand und in der Schwimmstellung horizontal auswärts gegen die Unterseite des überstehenden Aufbaus (5) anliegenden Stegabschnitt (3a) mit an der der Drehachse (4) entsprechenden Kante angeordneten Scharnierteilen und einen am anderen Ende des Stegabschnitts (3u) angeordneten Hauptteil mit einem in der Fahrstellung gegenüber dem Stegabschnitt (3a) auswärts vorspringenden und in der Schwimmstellung mit hinreichendem Freibord über die Wasserlinie hinausragenden Oberteil und einem sich in der Fahrstellung gegen den Boden des Bootsrumpfes (2) anlegenden Kiel aufweist und daß die Räder (8) an mindestens einer im Unterteil des Bootsrumpfes (2) angeordneten tragenden Querachse (7) befestigt sind.

Bekannt ist aus der Druckschrift US 4 024 592 A eine Campingbootkonstruktion, die auf einem Kleinlastwagen zu transportieren ist. Der Campingcontainer (camper body) weist dabei an seinen unteren Kanten über um 90° von der vertikalen Transportlage in die horizontale Nutzlage schwenkbare Plattformen auf, welche bei der Wassernutzung ein umlaufendes Außendeck bilden.

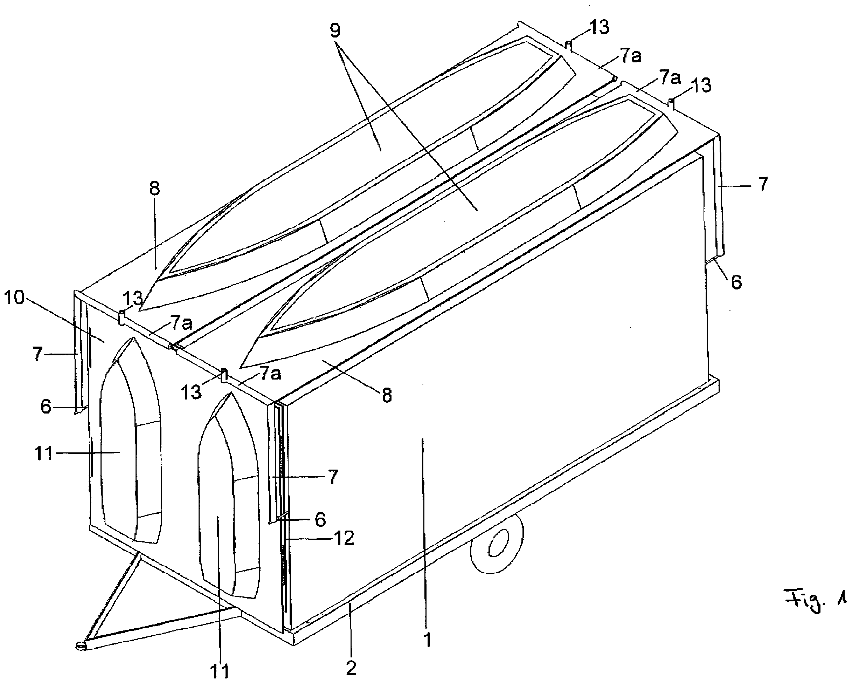

Diese beschränken allerdings in der zuerst beschriebenen Ausgestaltung die Zugänglichkeit des Containers im Transportzustand, was einer gleichwertigen Land- und Wassernutzung, im Gegensatz zu der zu prüfenden technischen Lösung, zuwiderläuft.
Die vier Schwimmkörper in Form von geschlossenen, luftgefüllten Pontons werden im Transportzustand auf der Oberseite des Containers nebeneinander festgeschnallt und bei Bedarf offenbar per Hand dort entnommen und unterhalb der seitlichen Plattformen mit Hilfe von Querträgern montiert, wobei je Seite zwei Pontons in Reihe hintereinander angeordnet werden.
In einer zweiten Ausgestaltung werden die Schwimmkörper mit zum Campingcontainer bündigen Außenflächen unterhalb des Campingcontainers montiert.
Die Bewegung des Containers vom Transportfahrzeug zum Wasser, aber nicht ins Wasser, erfolgt mit seitlich am Container höhenverstellbar befestigten Stäben (struts) 76 mit unterseitigen, nicht lenkbaren Rädern 80, 84, deren Ein- und Ausbau unklar ist, wenn die Stabführung 70 gemäß FIG. 1 bereits am Container befestigt ist.
Da die Räder nur bis zum Boden abgelassen und nicht mit Widerlager am Container nach unten gedrückt werden, muss der Container unter Überwindung der Reibung vom Fahrzeug gezogen werden.
Zeitpunkt und Ablauf der Montage der Pontons für den Wasserzustand sind nicht vollständig klar. Offenbar muss der Container mit Hilfe der angebauten Räder über die vorher vom Dach des Containers entnommenen und in entsprechender Lage am Boden abgelegten Pontons gefahren werden. Erst danach kann der Container auf die Pontons abgelassen und befestigt werden, wobei dann das Ausklappen der Endplattformen 126 und 130 nur möglich ist, wenn deren Breite kleiner ist als die Höhe der Querträger 140, 160. Wie das am Ende entstandene Campingboot dann zu Wasser gelassen wird, ist unklar.
Ebenfalls bekannt ist gemäß der AU000004189578A eine Vorrichtung, mit der herkömmliche Wohnwagen oder Fahrzeuge schwimmfähig gemacht werden sollen, die leicht an- und abbaubar ist und Form, Design und ursprüngliche Nutzung des Fahrzeugs nicht beeinträchtigt.
Die Vorrichtung besteht aus geschlossenen, luftgefüllten Pontons, die entsprechend Geometrie und Gesamtgewicht des Basisfahrzeugs angepasst werden und die an speziell entworfenen Gestellen am vorderen und hinteren Ende des Fahrzeugs befestigt werden.
Die Pontons befinden sich im Fahrzustand über dem Dach des Fahrzeugs und sind direkt an schwenkbaren, radialen Halterungen, die grundsätzlich den bei uns verwendeten abgeknickten Stäben entsprechen, befestigt.

Für den Schwimmzustand werden diese, analog der zu prüfenden erfinderischen Lösung um 180° nach unten geklappt und dort fixiert, dabei bilden die geschlossenen Oberseiten der Pontons die begehbaren Flächen. Vorn und hinten werden an denselben Gestellen, die auch die Pontons tragen, Plattformbereiche (decking sections) befestigt, die im Transportzustand hochgeklappt werden.
Nähere Angaben zur Befestigung und zum Klappmechanismus sind nicht enthalten.

In der Druckschrift US 3 673 622 A wird ein amphibischer Campingcontainer auf einem separaten Fahrgestell beschrieben, bei dem sich die quaderförmigen, geschlossenen Schwimmkörper im Landzustand innerhalb des Campingcontainers an dessen unteren, äußeren Längsseiten befinden.
Zur Herstellung des Schwimmzustandes werden diese zunächst durch erweiter- und einziehbare Arme nach außen verschoben und dann um ihre in diesem Zustand untere, äußere Kante um 180° nach unten geklappt. An der Rückseite des Containers befindet sich eine offenbar starre Plattform zur Erweiterung der Containerfläche nach außen, an der auch der Außenbordmotor befestigt ist. Flexible Erweiterungen der Decksfläche sind offenbar nicht vorgesehen. Beim Land-Wasser-Übergang wird der Container nach Lösen der Verbindungen zum im Wasser stehenden Fahrgestell mit Hilfe einer Seilwinde und am Fahrgestell befestigten Rollen zu Wasser gelassen.
Die direkte Nutzung von speziell an die Größe und Tragfähigkeit des jeweiligen Containers angepassten Pontons als Boote erscheint als Notlösung. Ein Umbau mehrerer Pontons zu z.B. einem Katamaran erfordert einen deutlichen Aufwand.

Auch bekannt ist die DE 20 2008 001510 U1, welche Schutz beansprucht für ein Wasserfahrzeug.
Dieses besteht aus einem oder mehreren Hauptschwimmkörpern (7) einer darauf montierten Hauptplattform (1) zur Nutzung im Freizeit-/Wohn- und Arbeitsbereich und ist dadurch gekennzeichnet, dass an den Außenkanten der Hauptplattform (1) eine oder mehrere Zusatzfläche/n (2, 3, 4) montiert ist/sind, welche per Hand oder mittels einer elektrischen oder hydraulischen oder pneumatischen Vorrichtung oder einer Kombination aus mindestens Seite zwei der genannten Vorrichtungen in eine von der horizontalen abweichende, insbesondere senkrechte, Position bringbar ist/sind.

Nachteilig bei allen diesen bekannten technischen Lösungen ist der an dem Nutzeffekt gemessene relativ komplizierte Umbau. Ebenfalls als nachteilig wird betrachtet, dass eine intensivere Nutzung auf dem Wasser als auch dem Land nicht als gleichwertig betrachtet werden kann.

Der Erfindung liegt die Aufgabe zugrunde, einen amphibischen Wohnwagen, dessen Schwimmkörper mehrfach Verwendung finden können und mit welchem eine einfache Art des Land-Wasser-Übergangs realisiert werden kann vorzuschlagen, mit welchem die Schwierigkeiten bisher bekannter Lösungen möglichst vermieden werden sollen.

Erfindungsgemäß wird diese Aufgabe durch einen amphibischen Wohnwagen gemäß den Merkmalen des Anspruches 1 gelöst.

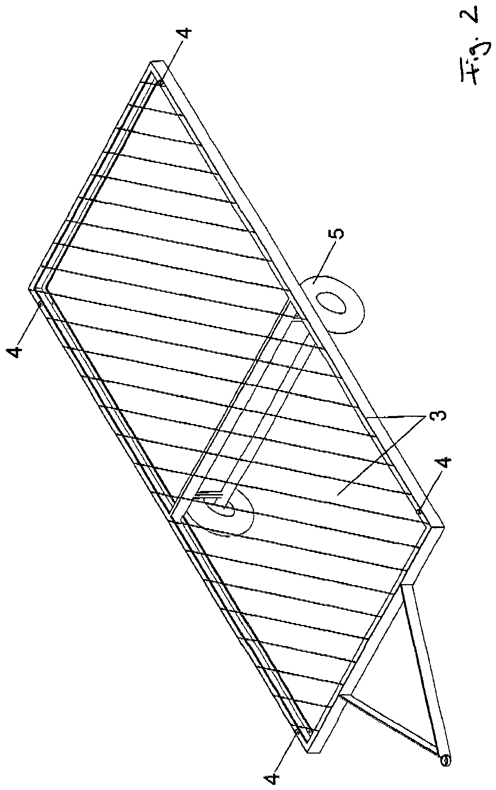

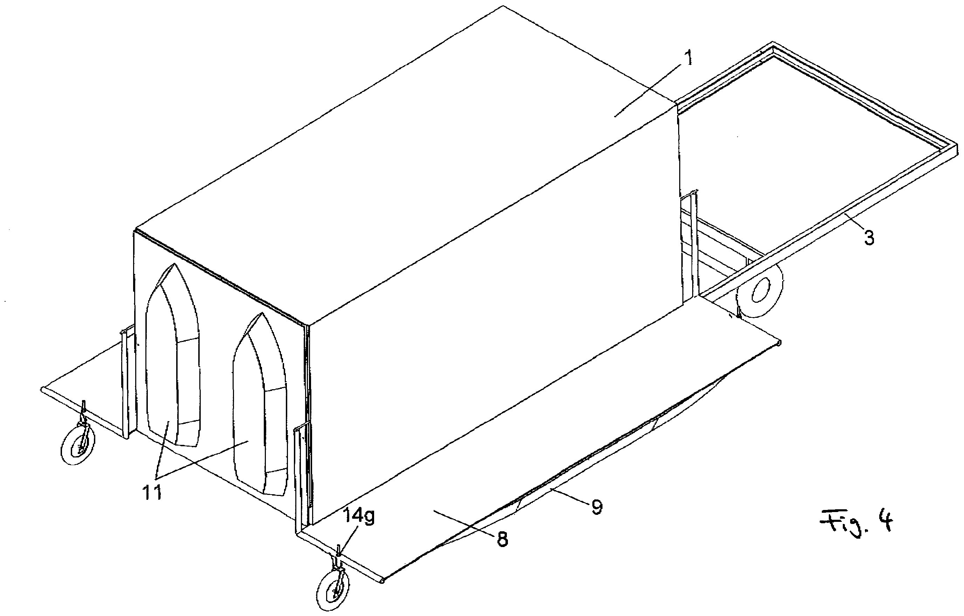

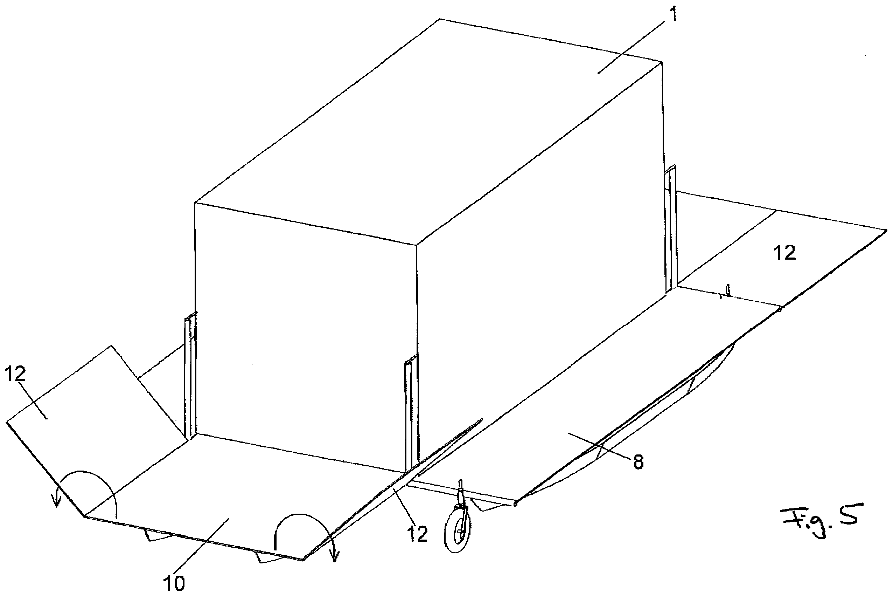

Nachfolgend soll dieser amphibischen Wohnwagen anhand der Figur 1 bis 5 und dem Ausführungsbeispiel näher erläutert werden.

### Dabei zeigt

Abbildung 1 den erfindungsgemäßen amphibischen Wohnwagen im Fahrzustand,
Abbildung 2 das Fahrgestell 2 mit horizontaler, vollflächiger Plattform oder einem Stabwerksrahmen 3 mit den erforderlichen Befestigungspunkten 4,
Abbildung 3 den erfindungsgemäßen amphibischen Wohnwagen mit heruntergeklappten seitlichen Plattformen 8 im Uferzustand, ohne Abbildung des Fahrgestells 2
Abbildung 4 den erfindungsgemäßen amphibischen Wohnwagen im Uferzustand mit bereits teilweise vom Fahrgestell 2 bewegten Wohncontainer 1 und
Abbildung 5 bildet den erfindungsgemäßen amphibischen Wohnwagen im Wasserzustand mit heruntergeklappten Plattformen 8 und 10 ab.

Nachfolgend soll der Aufbau des amphibischen Wohnwagens sowie die zur Umrüstung von Straßen- auf Wassernutzung erforderlichen Schritte anhand eines Ausführungsbeispiels näher erläutert werden.

Der erfindungsgemäße amphibische Wohnwagen besteht aus einem separaten, vorzugsweise quaderförmigen Wohncontainer 1, der lösbar auf einem Fahrgestell 2 zu befestigen ist.
Das Fahrgestell 2 verfügt über eine horizontale, vollflächige Fahrgestellplattform oder einen Stabwerksrahmen 3 mit den erforderlichen Befestigungspunkten 4.

Die Fahrgestellräder 5 sind zweckmäßigerweise so angeordnet, dass sie sich unterhalb der horizontalen Fahrgestellplattform 3 befinden, eine solche Ausgestaltung bezeichnet man regelmäßig als Hochlader.

Vorzugsweise in etwa halber Höhe der vertikalen Außenkanten des Wohncontainers 1 sind, bezogen auf den Container, um horizontale Längsachsen 6 bewegliche, vorzugsweise drehbar gelagerte, abgeknickte Stäbe 7 angeordnet.

Im Fahrzustand (Fig. 1) verlaufen die Stäbe 7 vom Anlenkpunkt zunächst etwa senkrecht nach oben bis kurz oberhalb der Dachhöhe des Wohncontainers 1 und nach einem 90°-Knick horizontal nach innen, in der Figur bezeichnet mit 7a, bis knapp zur Hälfte der Wohncontainerbreite.

Zwischen diesen horizontalen Stababschnitten 7a wird auf jeder Längsseite des Wohncontainers 1 eine später begehbare Plattform 8 in einer Breite, die etwa der halben Containerbreite entspricht, ausgebildet.

Auf den im Fahrzustand (Fig. 1) hochgelagerten Plattformen 8 werden lösbar vorzugsweise zwei Boote 9 in entsprechender Größe und Tragfähigkeit kieloben befestigt.

Diese können auch in dieser Position als Stauraum genutzt werden.
Da die offene Oberseite der Boote 9 im Normalfall keine Ebene bildet, versteht es sich, dass die Öffnungen zweckmäßig mit Blechen, Kunststoffplatten, Planen oder anderen geeigneten Mitteln lösbar wasserdicht verschlossen oder mit Dichtungsprofilen zur Plattform 8 hin abgedichtet werden.

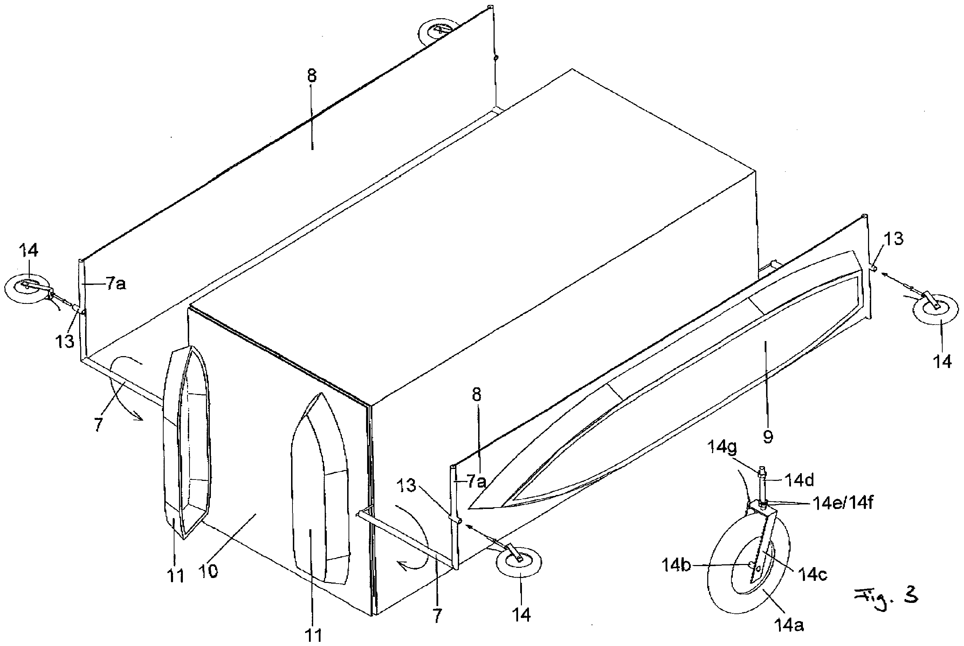

Im Uferzustand (Fig. 3) werden die Plattformen 8 mit den Booten 9 um 180° nach unten geklappt und in dieser Lage verriegelt.

Zur Erleichterung dieses sowie des umgekehrten Vorgangs können am Gelenkende des Stabes 7 Drehfedern angebracht werden. Alternativ oder in Ergänzung dazu können die Plattformen 8 einschließlich der Boote 9 auch mit Hilfe von zweckmäßig angebrachten Seilwinden, Flaschenzügen oder Linearantrieben bewegt werden. Im heruntergeklappten Zustand können die Boote 9 bei Landnutzung des Wohnwagens entnommen und bestimmungsgemäß genutzt werden.

An der Vorder- und/oder Rückseite des Wohncontainers 1 sind vorzugsweise ebenfalls Plattformen 10 an der unteren, querverlaufenden Kante des Wohncontainers 1 drehbar, mit einem Endanschlag und Verriegelung nach 90° Drehwinkel in horizontaler Lage, angeordnet.

Im heruntergeklappten Zustand, also in horizontaler Lage unterseitig an diesen Plattformen 10 sind ebenfalls kleinere Boote oder hydrodynamisch günstig geformte Schwimmkörper 11 lösbar und/oder klappbar und zur Plattform 10 hin wasserdicht befestigt.

Diese können zusätzlich ebenfalls als Stauraum genutzt werden. Eventuell dort befindliche Tür- oder Fensteröffnungen des Wohncontainers 1 müssen in diesen Plattformen 10 ausgespart und im Schwimmzustand separat abgedeckt werden.

Zur seitlichen Erweiterung der nutzbaren Fläche außerhalb des Wohncontainers 1 im Schwimmzustand und zur Verbindung der Plattformen 8 und 10 sind zweckmäßig eingeklappte zusätzliche Plattformen 12, die an den äußeren Längsrändern der Plattformen 10 um 180° drehbar gelagert sind, vorgesehen.

Der Übergang vom Uferzustand zum Schwimmzustand erfolgt in wenigen einfachen Schritten:
Die Plattformen 8 einschließlich der Boote 9 werden zunächst nach unten geschwenkt und in einer Zwischenlage angehalten oder verriegelt.

Vorzugsweise auf halber Länge der abgeknickten Stäbe 7a sind rechtwinklig zu diesen vorzugsweise Rohrstücken 13 angeordnet, die zur Aufnahme der höhenverstellbaren Stützräder 14 dienen.

Die Stützräder 14 bestehen aus vorzugsweise luftbereiften Rädern 14a mit großer Aufstandsfläche, die auf Achsen 14b in Radgabeln 14c laufen. Nach oben senkrecht auf den Radgabeln werden Gewindestangen 14d befestigt. Auf die Gewindestangen 14d werden Muttern 14e mit Unterlegscheiben oder Kugellagern 14f bis kurz über die Radgabeln 14c geschraubt.
Die Gewindestangen 14d werden dann von außen nach innen durch die, in dieser Lage zugänglichen Rohrstücke 13 geschoben und mit je einer Mutter 14g gegen Herausfallen gesichert. Danach können die Plattformen 8 einschließlich der Boote 9 vollständig heruntergeklappt und in dieser Lage verriegelt werden.

Nach Lösen der Befestigungen 4 zwischen Wohncontainer 1 und der Fahrgestellplattform 3 werden die Muttern 14e gleichmäßig nach oben gedreht bis der Wohncontainer 1 mit allen Anbauteilen frei über der horizontalen Fahrgestellplattform 3 steht und ins Wasser gefahren werden kann. Das Herunter- und Ausklappen sowie Verriegeln der übrigen Plattformen 10 und 12 erfolgt zu zweckmäßigen Zeitpunkten.

Die Stützräder 14 müssen mit ausreichend langen Seilen am Stab 7a oder der Plattform 8 befestigt sein, um sie nach Lösen der oberen Muttern 14g einfacher bergen zu können.

Der Übergang vom Wasser zum Land erfolgt in umgekehrter Reihenfolge.
Bei höhenverstellbarer Befestigung der Boote 9 und ggf. 11 können in Abhängigkeit von der Beladung auch im Schwimmzustand ein oder mehrere Boote 9 und 11 von der Gesamtkonstruktion gelöst und als Bei- oder Landungsboot benutzt werden.

## Patentansprüche

1. Amphibischer Wohnwagen, bestehend aus Booten (9, 11) und einem auf einem Fahrgestell (2) lösbar angeordneten separaten Wohncontainer (1), welcher auf jeder Längsseite ausgestattet ist mit später begehbaren Plattformen (8), welche im Fahrzustand oberhalb des Wohncontainers (1) gelagert sind sowie Wohncontainer (1), an seiner Vorder- und/oder Rückseite mit Plattformen (10) ausgestattet ist,
wobei der amphibische Wohnwagen so ausgebildet ist, dass die auf jeder Längsseite des Wohncontainers (1) angeordneten später begehbaren Plattformen (8) und die an Vorder- und Rückseite des Wohncontainers (1) angeordneten Plattformen (10) im Fahrzustand an den Wohncontainer (1) herangeklappt gelagert sind und im Wasserzustand so herunterzudrehen bzw. herunterzuklappen sind, dass sie nahezu horizontal liegend in einer Höhe zu arretieren sind, dass der Wohncontainer (1) oberhalb der Wasserlinie getragen wird,
wobei auf den im Fahrzustand hochgelagerten auf jeder Längsseite des Wohncontainers (1) angeordneten später begehbaren Plattformen (8) und an den an Vorder- und Rückseite des Wohncontainers (1) angeordneten Plattformen (10) lösbar die Boote (9, 11) mit offenen Oberseiten als Schwimmkörper in entsprechender Größe und Tragfähigkeit so befestigt sind, dass sie im Wasserzustand den Wohncontainer (1) in Schwimmlage auf dem Wasser aufliegend tragen und die Boote (9, 11) im heruntergedrehten bzw. heruntergeklappten Zustand entnommen werden können und bestimmungsgemäß zu nutzen sind
wobei der amphibische Wohnwagen zur seitlichen Erweiterung der nutzbaren Fläche außerhalb des Wohncontainers (1) im Schwimmzustand und zur Verbindung der Plattformen (8, 10) einklappbare zusätzliche Plattformen (12) aufweist, wobei die zusätzlichen Plattformen (12) an den äußeren Längsrändern an der vorder- und Rückseite des Wohncontainers (1) angeordneten Plattformen (10) um 180° drehbar gelagert sind
und bei welchem in etwa halber Höhe der vertikalen Außenkanten des Wohncöntainers (1), bezogen auf den Wohncontainer (1), um horizontale Längsachsen (6) bewegliche, drehbar gelagerte, abgeknickte Stäbe (7) angeordnet sind, welche Stäbe (7) vom Anlenkpunkt zunächst nach oben bis kurz oberhalb der Dachhöhe des Wohncontainers (1) und nach einem 90°-Knick horizontal nach innen (7a), bis knapp zur Hälfte der Wohncontainerbreite verlaufen, und somit die Stäbe (7) jeweils die vorderen und hinteren Auflager der auf jeder Längsseite des Wohncontainers (1) angeordneten später begehbaren Plattformen (8) bilden und rechtwinklig zu diesen Stäben (7) Rohrstücke (13) aufweisen, wobei die Rohrstücke (13), in Benutzung, zur Aufnahme der höhenverstellbaren Stützräder (14) dienen, wobei die Stützräder (14), in Benutzung, zum Zweck des Land-Wasser-Übergangs einzusetzen sind.

2. Amphibischer Wohnwagen nach Anspruch 1, bei welchem die Boote (9, 11) als Stauraum zu nutzen sind.

3. Amphibischer Wohnwagen nach Anspruch 2, bei welchem die offenen Oberseiten der Boote (9, 11) wasserdicht zu verschließen sind.

4. Amphibischer Wohnwagen nach Anspruch 2, bei welchem die offenen Oberseiten der Boote (9, 11) mit Dichtungsprofilen zur Plattform (8) hin abzudichten sind.

5. Amphibischer Wohnwagen nach Anspruch 1, bei welchem das Fahrgestell (2) gebildet ist aus einer horizontalen Plattform (3) mit den erforderlichen Befestigungspunkten (4) für den Wohncontainer (1), bei welchem die Fahrgestellräder (5) des Fahrgestells (2) so angeordnet sind, dass sie sich unterhalb der horizontalen Plattform (3) befinden

6. Amphibischer Wohnwagen nach Anspruch 1, bei welchem die Stützräder (14) gebildet sind aus Rädern (14a) mit großer Aufstandsfläche, die auf Achsen (14b) in Radgabeln (14c) laufen, gebildet werden und nach oben senkrecht auf den Radgabeln (14c) Gewindestangen (14d) aufweisen, welche mittels Muttern (14g) mit Unterlegscheiben oder Kugellagern (14f) bis kurz über die Radgabeln (14c) geschraubt sind und bei welchen die Gewindestangen (14d) von außen nach innen durch die, in einer zweckmäßigen Zwischenlage zwischen Fahr- und Schwimmlage zugänglichen Rohrstücke (13) geschoben und mit je einer Mutter (14g) gegen Herausfallen gesichert sind.

7. Verwendung eines amphibischen Wohnwagens nach Anspruch 1, bei welchem unter Verwendung einer höhenverstellbaren Befestigung der Boote als Schwimmkörper (9, 11) in Abhängigkeit von der Beladung auch im Schwimmzustand ein oder mehrere Boote (9, 11) von der Gesamtkonstruktion gelöst und als Bei- oder Landungsboot zu nutzen sind.

## Claims

1. An amphibious caravan consisting of boats (9, 11) and a separate living container (1) detachably arranged on a chassis (2) and equipped on each longitudinal side with platforms (8) enabling later access which are mounted in the driving state above the living container (1) as well as a living container (1) equipped on its front and/or rear side with platforms (10), wherein the amphibious caravan is designed so that the platforms (8) on each longitudinal side enabling later access and the platforms (10) arranged on the front and/or rear side of the living container (1) are hinged and stored on the living container (1) in the driving state and can be lowered or folded down In the water state such that they are locked nearly horizontally at a height such that the living container (1) is supported above the waterline,
whereby the boats (9, 11) with open topsides and in an appropriate size and with an appropriate load capacity for use as floats are detachably attached to the platforms (8) arranged on each longitudinal side enabling later access and folded up in the driving state and to the platforms (10) arranged on the front and/or rear side of the living container (1) so that they, when in the water state, support the living container (1) in a floating state on the water and so that, when folded or rotated down, enable the boats (9, 11) to be detached and used for their intended purpose, whereby the amphibious caravan has foldable additional platforms (12) for lateral expansion of the usable area outside the living container (1) in the floating state and for connecting the platforms (8, 10), wherein the foldable additional platforms (12) are 180° rotatably mounted on the outer longitudinal edges of the platforms (10) arranged on the front and rear of the living container and on which bent rods (7) are rotatably mounted for motion around the horizontal longitudinal axes (6) at about half the height of the vertical outer edges of the living container (1), relative to the living container (1), which initially extend from the pivot point upwards to just above the roof height of the living container (1) and bend horizontally inwards (7a) after a 90° bend to almost half of the width of the living container (1), and thus form the corresponding front and rear supports for the platforms (8) enabling later access arranged on each longitudinal side of the living container (1), and which have pipe sections (13) arranged at right angles to these rods (7), which serve to hold the height-adjustable support wheels (14), whereby the support wheels (14) are used for the purpose of transitioning from land to water and vice-versa.

2. An amphibious caravan according to claim 1, wherein the boats (9, 11) can be used as storage space.

3. An amphibious caravan according to claim 2, wherein the open topsides of the boats (9, 11) can be closed watertight.

4. An amphibious caravan according to claim 2, wherein sealing profiles produce a seal between the open topsides of the boats (9, 11) and the platform (8).

5. An amphibious caravan according to claim 1, wherein the chassis (2) is formed by a horizontal platform (3) with the required fastening points (4) for the container (1), on which the chassis wheels (5) of the chassis (2) are arranged such that they are located below the horizontal platform (3).

6. An amphibious caravan according to claim 1, wherein the support wheels (14) are formed by large footprint wheels (14a) running on axles (14b) in wheel forks (14c) and have threaded rods (14d) extending vertically from the wheel forks (14c) which are screwed by means of nuts (14g) with washers or ball bearings (14f) to just above the wheel forks (14c) and in which the threaded rods (14d) can be pushed from outside to inside through the accessible pipe pieces (13) located in an appropriate intermediate position between the driving and floating position and secured with one nut (14g) against falling out.

7. An amphibious caravan according to claim 1, wherein one or more boats (9, 11) can be detached from the overall construction, used as dinghies and/or landing craft, and, depending on the load, used as floats (9, 11), even when said construction is floating, via a height-adjustable attachment of said boats.

## Revendications

1. Caravane amphibie, composée de bateaux (9, 11) et d'un conteneur habitable (1) séparé disposé de manière amovible sur un châssis (2), le conteneur étant équipé sur chaque côté longitudinal de plates-formes (8) accessibles ultérieurement, qui pendant le roulage sont stockées au-dessus du conteneur habitable (1) et le conteneur habitable (1) est équipé à l'avant et/ou à l'arrière de plates-formes (10),
la caravane amphibie étant conçue de telle sorte que les plates-formes (8) accessibles ultérieurement disposées de chaque côté longitudinal du conteneur habitable (1) et les plates-formes (10) disposées à l'avant et à l'arrière du conteneur habitable (1)
étant stockées en étant repliées pendant le roulage sur le conteneur habitable (1) et pouvant être abaissées ou rabattues dans l'eau de manière à être bloquées à une hauteur située presque horizontalement de sorte que le conteneur habitable (1) soit transporté au-dessus de la ligne de flottaison,
à la condition que sur les plates-formes (8) accessibles ultérieurement disposées de chaque côté longitudinal du conteneur habitable (1) et surélevées pendant le roulage et sur les plates-formes (10) disposées sur le côté avant et arrière du conteneur habitable (1) les bateaux (9,11) soient fixés de manière détachable avec les côtés supérieurs ouverts comme flotteurs dans une dimension et capacité de charge appropriées, de sorte à supporter sur l'eau le conteneur habitable en position de flottaison sur l'eau et les bateaux (9,11) puissent être enlevés en état abaissé ou rabattu et doivent être utilisés comme prévu
à la condition que la caravane amphibie soit équipée de plates-formes (12) supplémentaires qui puissent être rabattues pour une extension latérale de la zone utilisable à l'extérieur du conteneur habitable (1) en état de flottaison et pour raccorder les plates-formes (8, 10), les plates-formes (12) supplémentaires aux plates-formes (10) disposées sur les bords longitudinaux extérieurs à l'avant et à l'arrière du conteneur habitables (1) soient stockées de manière à pouvoir tourner à 180°
et pour laquelle environ la moitié de la hauteur des bords extérieurs verticaux du conteneur habitable (1), par rapport au conteneur habitable (1), des tiges (7) mobiles, rotatives, pliées sont disposées autour des axes longitudinaux (6) horizontaux, lesquelles tiges (7) partent du point d'articulation d'abord vers le haut pour aller juste au-dessus de la hauteur du toit du conteneur habitable (1) et après une courbure de 90 ° horizontalement vers l'intérieur (7a), jusqu'à presque la moitié de la largeur du conteneur habitable, et ainsi les tiges (7) forment respectivement les supports avant et arrière des plates-formes (8) accessibles ultérieurement placées sur chaque côté longitudinal du conteneur habitable (1) et ont des sections de tube (13) perpendiculairement à ces tiges (7), les sections de tube (13) servant, en utilisation, à recevoir les roues de support (14) réglables en hauteur, à la condition que les roues de support (14), en utilisation, soient utilisées à des fins de transition terre-eau.

2. Caravane amphibie selon la revendication 1, pour laquelle les bateaux (9, 11) doivent être utilisés comme espace de rangement.

3. Caravane amphibie selon la revendication 2, pour laquelle les côtés supérieurs ouverts des bateaux (9, 11) doivent être fermés de façon étanche à l'eau.

4. Caravane amphibie selon la revendication 2, pour laquelle les côtés supérieurs ouverts des bateaux (9, 11) doivent être étanchéifiés avec des profilés d'étanchéité pour plate-forme (8).

5. Caravane amphibie selon la revendication 1, pour laquelle le châssis (2) est formé d'une plate-forme (3) horizontale avec les points de fixation (4) nécessaires pour le conteneur habitable (1), pour laquelle les roues du châssis (5) du châssis (2) sont placées de sorte qu'elles se trouvent sous la plate-forme (3) horizontale.

6. Caravane amphibie selon la revendication 1, pour laquelle les roues de support (14) sont formées de roues (14a) avec une grande zone de contact, qui roulent sur des essieux (14b) dans des fourches de roue (14c), et ont des tiges filetées (14d) verticalement vers le haut sur les fourches de roue (14c), lesquelles tiges filetées sont vissés au moyen d'écrous (14g) avec des rondelles ou des roulements à billes (14f) juste au-dessus des fourches de roue (14c) et pour lesquels les tiges filetées (14d) sont poussées de l'extérieur vers l'intérieur à travers les sections de tube accessibles dans une position intermédiaire appropriée entre la position de roulement et de flottaison et sont protégées contre la chute avec resp. un écrou (14g).

7. Utilisation d'une caravane amphibie selon la revendication 1, pour laquelle, en utilisant une fixation réglable en hauteur des bateaux comme corps flottants (9, 11), en fonction de la charge, même à l'état de flottaison, un ou plusieurs bateaux (9, 11) sont détachés de la construction globale et doivent être utilisés comme canot ou barque de débarquement.
